Europäisches Patentamt

European Patent Office

Office européen des brevets

(19)

(11) **EP 0 483 432 B1**

(12) **EUROPEAN PATENT SPECIFICATION**

(45) Date of publication and mention
of the grant of the patent:
**17.12.1997 Bulletin 1997/51**

(51) Int Cl.$^6$: **H02M 3/335**

(21) Application number: **90403094.7**

(22) Date of filing: **31.10.1990**

(54) **Sinusoidal power supply**

Sinus-Stromversorgung

Alimentation sinusoidale

(84) Designated Contracting States:
**AT BE CH DE DK ES FR GB GR IT LI LU NL SE**

(43) Date of publication of application:
**06.05.1992 Bulletin 1992/19**

(73) Proprietor: **THOMSON TUBES & DISPLAYS SA
92400 Courbevoie (FR)**

(72) Inventors:
• **Perreaut, Jean-Marc
F-21000 Dijon (FR)**
• **Dumesnil, Alain
F-21110 Genlis (FR)**

(74) Representative: **Einsel, Robert, Dipl.-Ing.
Deutsche Thomson-Brandt GmbH
Patent- und Lizenzabteilung
Göttinger Chaussee 76
30453 Hannover (DE)**

(56) References cited:
**US-A- 3 443 246          US-A- 4 888 821**

## Description

This invention relates to the field of regulated power supplies, and in particular, to regulated very high voltage power supplies of the kind having VHV voltage multipliers energized by sinusoidal power generators.

A power supply according to the preamble of claim 1 is disclosed in US-A-4 888 821.

Regulated very high voltage (VHV) power supplies of the kind energized by sinusoidal power generators generally utilize a feedback winding which involves the oscillation of the VHV power supply. Problems are encountered in these supplies in regulating the output voltage, as the output voltage and the natural or resonant frequency of the VHV multiplier varies due to the load. Two well known techniques have been employed for regulating these supplies, often referred to as regulation by the power supply and regulation by the feedback loop current.

Regulation by the power supply can be implemented in a circuit comprising a transformer, having a primary winding coupled to a power source through a regulating transistor and coupled to a power transistor. The conduction of the regulating transistor is controlled by an error amplifier. The error amplifier is responsive to a feedback signal from a VHV multiplier coupled to a secondary winding of the transformer. Another winding of the transformer forms part of an R-L-C network coupled between the output of the regulating transistor and the base of the power transistor. A sine wave voltage of peak to peak value equal to twice the voltage of the power source develops on the primary of the oscillating power supply. The only way to adjust the output value of the system is to vary the voltage of the power source. Although this solution provides good results from the point of view of static regulation, it is quite poor for dynamic regulation. Moreover it has not proven possible with a ballast set-up to obtain a sufficiently wide regulating range, or band pass, to meet the requirements of a cathode ray tube. When large-scale cathode ray currents are required, for example during a half-frame or progressive scanning operation, this regulating system is unsatisfactory because the loop cannot react fast enough. This results in distortion of the picture whenever high currents are required.

Regulation by means of a feedback loop can be implemented in a circuit comprising a transformer having a primary winding coupled to a power source and to a power transistor. A VHV multiplier is coupled to a secondary winding of the transformer. A feedback signal from the VHV multiplier is an input to an error amplifier. The output of the error amplifier is coupled to the base of the power transistor through another winding of the transformer. In this case, regulation is obtained by reinjecting the loop current into the base of the power transistor. Although this system provides good static regulation, and acceptable dynamic regulation, there are a number of drawbacks. Most importantly, the specific operating characteristics of the power transistor play a very important part in determining the general operation of the power supply. In particular, the current gain characteristic of the transistor, which tends to vary from one transistor to another, can be critical. Reproducible operating characteristics from one power supply to another cannot be guaranteed, due to the variability of the transistors. Mass production of a general purpose design becomes very difficult, if possible at all. Moreover, debugging this type of circuit is generally a delicate matter and its operation may involve certain risks. A major risk is quite simply the failure of the power supply if the current required becomes too high or if the temperature increases too much.

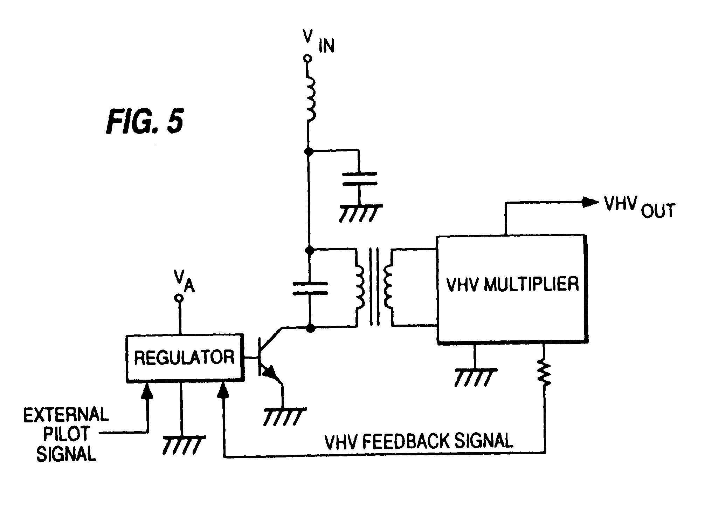

A regulator developed by VIDEOCOLOR incorporating a sampling circuit solved many of the foregoing problems. A power supply having such a regulator is shown in FIGURE 5. The regulator comprises three fundamental components and is designed to operate with the VHV power supply. The fundamental components are a power circuit, a sampling and modulating circuit, and a high voltage measuring circuit.

The VHV multiplier used in combination with the regulator forms, as seen from the primary, is an oscillating circuit which is excited by short current pulses. These pulses are delivered by a power transistor behaving like a current generator. The power transistor does not operate in saturation and effects the upward and downward regulation by modulating the amplitude of the excitation pulse. This current pulse, injected at the time at which the sinusoidal voltage waveform becomes the minimum peak value at the collector of the power transistor in the oscillating circuit used to resupply the energy transferred from the voltage multiplier to the load.

The modulator may comprise a transistor operated as switch, controlled by an externally generated pilot signal. The external pilot signal must nevertheless be at the natural frequency of the VHV multiplier. The natural or resonant frequency of the primary winding of the step up transformer will also vary during operation. The synchronization of the external pilot signal must be adjusted accordingly, increasing the complexity of the power supply. If the pilot signal does not remain substantially synchronized with the VHV generator, the power output can be substantially reduced. The optimum duty cycle of the pilot signal is approximately 14%.

The pulses of the pilot signal are amplitude modulated by voltage representative of the feedback voltage. The current delivered to the base of the power transistor can be limited, thus causing a limitation of the VHV current. It can be seen that with this set-up, the current injected in the base of the power transistor does not depend on a feedback loop, and that the parameters of the power transistor are not a factor involved in determining the final operating characteristics of the power supply.

The feedback signal for the output VHV voltage can be obtained by a high value sampling resistor included in the voltage multiplier. The sampling resistor and the parasitic capacitance of the associated circuit can form a very narrow band pass filter, which can undesirably attenuate the feedback signal. In order to avoid this problem, a resistive-capacitive compensated divider, having a much wider band pass than the sampling resistor alone, can be implemented. The measured VHV voltage is then compared to an adjustable reference in an operational amplifier. A DC voltage at output of the operational amplifier reflects the error voltage between the reference and the measurement.

A circuit with the foregoing regulating scheme still poses a significant problem. In particular, is the need to generate a very stable external pilot signal, exactly adjusted and readjusted as necessary to match the natural frequency of the voltage multiplier. This remaining problem is overcome in a power supply according to claim 1.

A high voltage power supply, in accordance with an inventive arrangement, comprises a transformer having primary and secondary windings, a power source for exciting the primary winding with a sinusoidal waveform and a voltage multiplier coupled to the secondary winding for developing a derived voltage source for driving a load. A switch is coupled to the primary winding for periodically supplying the primary winding with energy pulses to replenish load losses. A regulator synchronized with a timing signal, that is, an internal pilot signal, controls the switch responsive to variations of the derived voltage source due to the load. An oscillating circuit is coupled to the primary winding for generating the timing signal, or internal pilot signal. The oscillator operates synchronously with the sinusoidal waveform. The sinusoidal waveform automatically tracks variations of the operating frequency of the VHV multiplier due to the load, and accordingly, the internal pilot signal automatically tracks the variations as well. The timing signal comprises pulses coincident in time with minimum amplitude peaks of the sinusoidal waveform. The oscillating circuit may comprise a capacitor and a diode junction coupled in series with the primary winding. The oscillator may be embodied as a multivibrator comprising cross coupled transistors. The diode junction may be part of one of the cross coupled transistors in the multivibrator. The pulses correspond to conduction of the diode junction. The multivibrator has a natural frequency less than that of the sinusoidal waveform, particularly when taking thermal drift into consideration.

Another inventive arrangement in a high voltage power supply involves the novel interconnection of a sinusoidal power generator, an oscillator and a regulator in a closed synchronizing control loop. A power supply according to this inventive arrangement comprises a transformer, a sinusoidal power generator, a derived secondary voltage source, an oscillator and a regulator. The transformer has primary and secondary windings. The sinusoidal power generator periodically supplies the primary winding of the transformer with energy pulses at a natural operating frequency. A derived voltage source for driving a load is coupled to the secondary winding of the transformer. The operating frequency tends to vary with the load. The oscillator is synchronized with the power generator for generating a timing signal tracking the varying operating frequency. A regulator is synchronized with the timing signal for generating a control signal tracking the varying operating frequency to regulate the power generator responsive to a signal indicative of variations of the derived voltage source. The oscillator is synchronized with the power generator, the regulator is synchronized with the oscillator and the power generator is synchronized with the regulator, all in a continuous dosed control loop which assures that the timing signal always matches the operating frequency of the power generator and the derived secondary voltage source. Maximum efficiency is maintained however the operating frequency may vary during operation. As described above, the oscillator can be synchronized with the power generator by coupling the oscillator to the primary winding of the transformer by a network Including a capacitor and a diode junction coupled in series. In particular, for example, the oscillator may be embodied as a multivibrator comprising cross coupled transistors. The diode junction may be the emitter to base junction of one of the cross coupled transistors.

FIGURE 1 is a power supply according to inventive arrangements taught herein, in block and schematic form.

FIGURE 2 is an illustrative circuit for implementing the regulator of FIGURE 1.

FIGURE 3 is an illustrative circuit for implementing the VHV multiplier of FIGURE 1.

FIGURE 4 is an illustrative circuit for implementing the oscillator of FIGURE 1.

FIGURE 5 is a power supply having an external pilot signal according to the prior art, in block and schematic form.

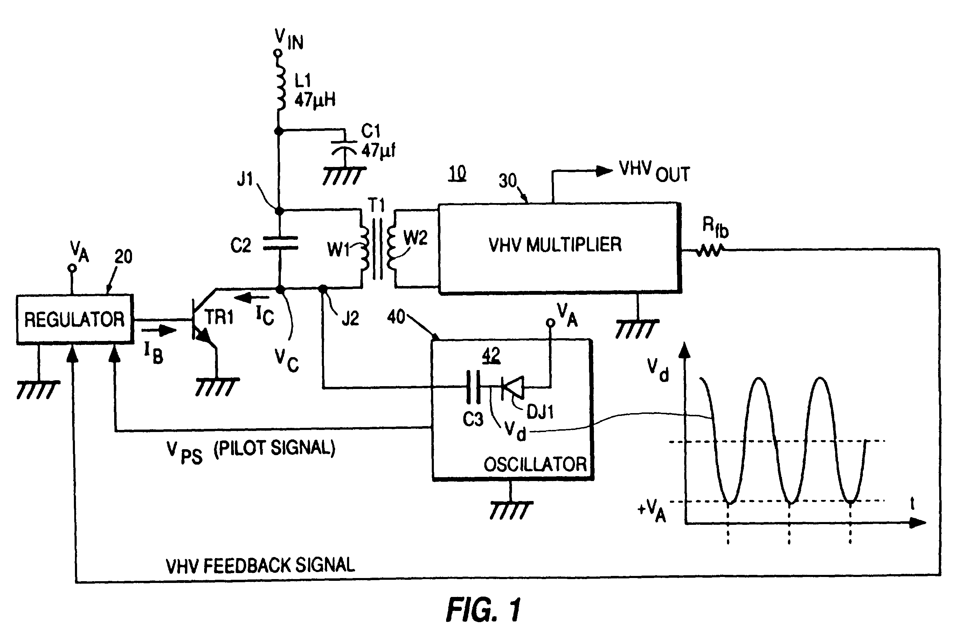

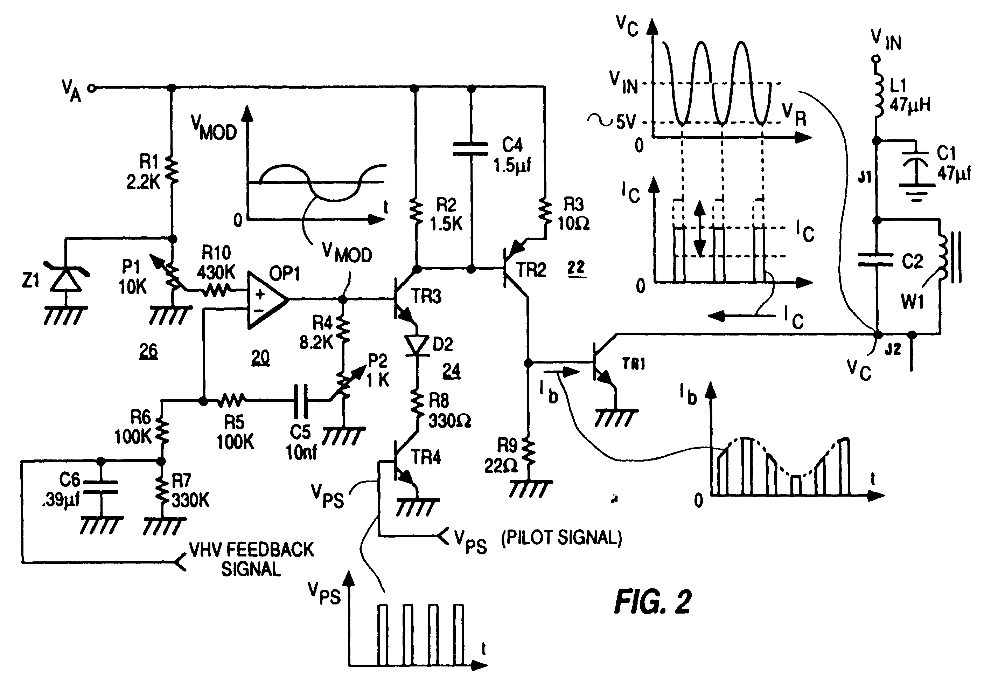

An oscillating very high voltage power supply 10, of the kind energized by sinusoidal power generators, is shown in FIGURE 1 in block and schematic form. The power supply 10 comprises generally a transformer T1, a power transistor TR1, a regulator 20, a very high voltage (VHV) multiplier 30 and an oscillator 40. A first voltage source $V_{IN}$ supplies power to the transformer T1 during conduction of transistor TR1. A second voltage source $V_A$ supplies power to the regulator 10 and the oscillator 40. In the embodiment shown in FIGURE 1, and in more detail in FIGURES 2, 3 and 4, $V_{IN}$ is a +50 volt power source and $V_A$ is a +24 volt power source.

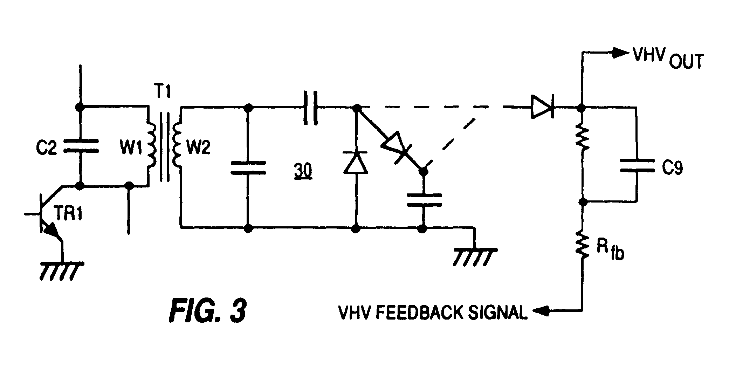

Voltage source $V_{IN}$ is coupled to a first winding W1 of transformer T1 through inductor L1. The junction J1 of winding W1 and inductor L1 is coupled to ground through capacitor C1. Capacitor C2, coupled in parallel with winding W1, represents the parasitic capacitance of the secondary winding as viewed from the primary winding. The junction J2 of winding W1 and capacitor C2 is coupled to the collector of transistor TR1. The emitter of transistor TR1 is grounded. The base of transistor TR1 receives control pulses from regulator 20, which determine the level of conduction of transistor TR1. This in turn determines the amount of energy coupled through the transformer T1 from primary winding W1 to a secondary winding W2, and hence, VHV multiplier 30. The high voltage output of VHV multiplier 30, designated $VHV_{OUT}$, drives a load, not shown. Such a load may be a deflection circuit in a television apparatus, but need not be so limited. The effect of the load is monitored by a VHV feedback signal developed through or across a feedback resistor Rfb. The VHV feedback signal is an input to the regulator 20. VHV multipliers are known in the art and need not be explained in detail. In one type, for example, the secondary winding of a transformer is formed by a number of sections which are connected in series by diodes, the beginning of the first section also being connected to a diode whose anode is connected to a point carrying a fixed potential. In a further refinement, the beginning and end of the first section is also connected to the point carrying the fixed potential by means of capacitors. Any voltage between one and two times the voltage across a section can be tapped off at the beginning of the second section, by suitable choice of the capacitors. A suitable VHV multiplier 30 is shown in FIGURE 3.

In accordance with an inventive arrangement, an internal pilot or timing signal $V_{PS}$ is generated by oscillator 40. The junction J2 of winding W1, capacitor C2 and the collector of transistor TR1 is coupled to a synchronizing circuit 42 in the oscillator 40 for synchronizing the pilot signal. Circuit 42 assures that the output of the oscillator 40 is properly timed relative to the sinusoidal voltage waveform on the collector of transistor TR1. In particular, the pilot signal comprises pulses coincident in time with minimum amplitude peaks of the sinusoidal waveform. In accordance with another inventive arrangement, the circuit 42 comprises a diode junction DJ1 and a capacitor C3 coupled in series between the voltage source $V_A$ and the junction J2. The voltage Vd at the junction of capacitor C3 and diode junction DJ1 is such that DJ1 conducts only when Vd reaches the minimum peak value, which corresponds to the minimum peak value of Vc and the resonance of the VHV multiplier 30, as illustrated by the accompanying waveform.

The regulator 20 is shown in more detail in FIGURE 2. The regulator can be considered in three parts for illustrative purposes: a power circuit 22; a sampling and modulating circuit 24; and, a high voltage measuring circuit 26. The VHV multiplier used in combination with the regulating circuit forms, as seen from the primary winding W1, an oscillating circuit which is excited by short pulses. These short pulses are delivered by a power transistor TR1, which functions like a current generator. Transistor TR1 does not operate in a saturated state and effect upward and downward regulation by modulating the excitation pulses of the pilot signal $V_{PS}$. The current pulse, injected at the time at which the sinusoidal voltage Vc on the collector of the power transistor TR1 becomes a minimum peak value in the oscillating circuit, is used to resupply the energy transferred from the VHV multiplier to the load.

If it is agreed that the peak sinusoidal voltage Vr remains more or less constant during the conduction of the power transistor TR1, the power supplied to the VHV block can be expressed as:

$$(1) \qquad P_{BLOCK} = (V_{IN} - Vr) . Ic . t/T,$$

where current Ic is the current flowing into the collector of transistor TR1. The factor t/T is the duty cycle of the pilot signal, where t is the pulse width and T is the period. The power requirement is:

$$(2) \qquad P_{IN} = V_{IN} . Ic . /T.$$

The power lost in the transistor is:

$$(3) \qquad P_{TR} = Vr . Ic . t/T$$

In practice, Vr and Ic do not remain constant during the conduction of a transistor, but the above approximations remain fairly accurate when referring to mean values.

The losses in the VHV multiplier can be from 1 watt to 5 watts. The power used can reach 75 watts. The current Ic should therefore be able to vary in a ratio of more than 60 times, depending on the VHV multiplier load. Conversely, the current in the transistor is independent of the power voltage.

The relation between the VHV multiplier output current and current Ic is linear. Accordingly, the VHV multiplier can be deemed to perform as a current source. Operation as a small-signals circuit enables the current source to be voltage controlled.

The frequency response of the power system to the modulation signals is of the first order. The break at 3 dB is generally between a few Hz and a few tens of Hz. Beyond this, the response remains at 6 dB/octave until the sampling phenomena occur at the pilot frequency. The pass-band in closed loop can therefore be several kHz or even several tens of kHz depending on the sampling frequency.

The modulator comprises the transistor TR4, which operates as a switch controlled by the pilot signal, at the natural frequency of the VHV multiplier. The optimum duty cycle is approximately 14%.

Transistor TR3 develops current pulses in resistor R2, amplitude modulated by the voltage present on its base. The current delivered by transistor TR2 to the base of the power transistor TR1 can be limited by resistor R3, thus causing a limitation of the VHV multiplier current. Accordingly, the current injected in the base of the power transistor TR1 does not depend on a feedback loop, and the operating parameters of this transistor do not determine the response of the overall circuit.

The VHV measurement is obtained by a high value resistor Rfb, for example 1.5 Gohm, included in the VHV multiplier. The sampling resistor Rfb and the parasitic capacitance of the associated circuit can form a very narrow band pass filter, which can undesirably attenuate the feedback signal. In order to avoid this problem, a resistive-capacitive compensated divider, having a much wider band pass than the sampling resistor alone, can be implemented. The compensated divider shown in Fig.2 and 3 is formed with capacitor C9, capacitor C6 and resistor R7. The measured VHV feedback voltage is compared to a reference voltage adjustable by potentiometer P1. A DC voltage is developed at the output of the operational amplifier OP1 which reflects the error voltage between the reference and the feedback measurement.

In order to benefit from a maximum loop gain in static conditions, the operational amplifier is coupled in an open loop configuration. The response of the operational amplifier is determined by resistor R5, capacitor C5 and potentiometer P2, which is adjusted to assure stable operation.

The operation can be further appreciated from the waveforms accompanying FIGURE 2. The pilot signal $V_{PS}$ consists of pulses having a uniform amplitude. The output voltage $V_{MOD}$ of amplifier OP1 reflects variations of the output voltage $VHV_{OUT}$ due to the load. The amplitude of the pulses in the pilot signal are modulated by $V_{MOD}$, resulting in the current waveform Ib, which are the current pulses injected into the base of power transistor TR1. The current Ib results in current Ic into the collector of the power transistor TR1. The voltage Vc at the collector of power transistor TR1, which is also the voltage at the junction J2, is a sinusoidal waveform as shown. It can be seen that the current pulses coincide in time with the minimum peak voltage of the sinusoidal waveform Vc.

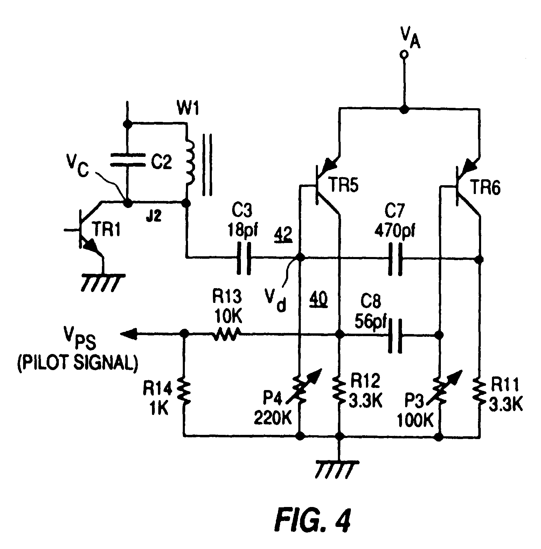

In accordance with an inventive arrangement, the sinusoidal waveform Vc is a synchronizing control signal for the oscillator 40, shown in more detail in FIGURE 4. The regulating circuit requires a very stable frequency pilot, exactly adjusted to the natural frequency of the VHV multiplier as the frequency varies due to the load. The pulses by the pilot signal should occur at the minimum point of the sinusoidal waveform Vc present on the collector of the power transistor TR1. The oscillator 40 can be implemented as a multivibrator with 2 PNP transistors TR5 and TR6.

The multivibrator can be synchronized by the sinusoidal waveform Vc in accordance with a further inventive arrangement. In order to synchronize the multivibrator with the time at which the sinusoidal waveform changes to a minimum value, an alignment circuit according to an inventive arrangement comprises a capacitor C3 and the emitter base junction of transistor TR5. The emitter base junction of transistor TR5 is an implementation of the diode junction DJ1 shown in FIGURE 1. Waveform Vd shown in FIGURE 1 is at the base of transistor TR5. Waveform Vd is aligned at -0.7 volts with respect to the power supply. For each excursion of voltage Vd to voltage level $V_A$, the diode junction of FIGURE 1, and the base emitter junction of TR5 in FIGURE 4, conducts. Each pulse of the pilot signal $V_{PS}$ corresponds to such conduction.

The oscillator 40 has the elements required to start up and maintain oscillation. On starting up, the multivibrator is used to produce the first timing or pilot pulse. Transistor TR5 supplies the timing or pilot pulse, adjusted to the duty cycle of 14%. Transistor TR5 is normally switched off except during the timing or pilot pulse. This status enables the multivibrator to be subsequently synchronized with the sinusoidal signal Vc and the VHV multiplier 30, making TR5 conduct only for a short moment. Potentiometer P3 is used to adjust the free running frequency of the oscillator 40. The free running frequency is adjusted on construction to a value slightly lower than the natural frequency of the VHV multiplier. Caution must be exercised when defining the natural frequency of the pilot signal to calculate the thermal drift of the oscillator, so that the free running frequency of the multivibrator is always lower than the frequency of the VHV multiplier, to provide reliable synchronization.

As soon as a sinusoidal waveform appears on the collector of transistor TR1, the sinusoidal waveform is coupled to the oscillator 40 through the network of capacitor C3 and the emitter to base junction in transistor TR5. The sinusoidal waveform causes conduction of the emitter to base junction of transistor TR5 at the time at which the sinusoidal waveform becomes a minimum peak value. Transistor TR5 is saturated when this junction conducts. The conduction of transistor TR5 eventually results in the conduction of transistor TR6, which turns transistor TR5 off. The conduction of transistor TR6 eventually turns transistor TR5 back on, and so the cycle continues. The frequency of the multivibrator is adjusted exactly and automatically to that of the VHV multiplier. Oscillation is thus obtained simultaneously with the exact synchronization of the pilot signal frequency to that of the VHV multiplier. Any tendency of oscillator induced drift in the pilot frequency is prevented by the synchronization. High voltage power supplies according to inventive arrangements disclosed herein are not only applicable to VHV generators, but to all sine wave generators which can be made oscillating.

## Claims

1. Power supply, comprising:

    a transformer (T1) having primary (W1) ) and secondary (W2) windings;
    means (C2) for resonating with said primary winding (W1) to generate a sinusoidal waveform ($V_C$);

means (30) coupled to said secondary winding for developing a derived voltage source (VHV) for driving a load;
a transistor (TR1) coupled to said primary winding for periodically supplying said primary winding with energy pulses ($I_C$) to replenish load losses; and
means (40) for generating a timing signal ($V_{PS}$) comprising pulses substantially coincident with minimum amplitude peaks of said sinusoidal waveform ($V_C$);

**characterized by**

regulating means (20) synchronized with said timing signal ($V_{PS}$), and controlling the operation of said transistor (TR1) so that it does not operate in saturation and effects upward and downward regulation by modulating the pulses of said timing signal ($V_{PS}$), responsive to a signal (feedback) indicative of variations of said derived voltage source (VHV); and
said means for generating a timing signal comprises an oscillating means (40).

2. Power supply of Claim 1, **characterized in that** said oscillating means comprises a capacitor (C3) and a diode junction (emitter-base of TR5) coupled in series with said primary winding (W1).

3. Power supply of Claim 2, **characterized in that** said diode junction forms part of a transistor (TR5) in a multivibrator.

4. Power supply of Claim 3, **characterized in that** said multivibrator (TR5, TR6) has a free running frequency less than the frequency of said sinusoidal waveform.

5. Power supply of Claim 2, **characterized in that** said pulses (IC) correspond to conduction of said diode junction (emitter-base of TR5).

**Patentansprüche**

1. Stromversorgung, enthaltend:

einen Transformator (T1) mit einer Primärwicklung (W1) und einer Sekundärwicklung (W2);
Mittel (C2) für eine Resonanzbildung mit der Primärwicklung (W1) zum Erzeugen einer Sinusschwingung ($V_C$);
mit der Sekundärwicklung verbundene Mittel (30) zum Bilden einer abgeleiteten Spannungsquelle (VHV) zum Speisen einer Last;
einen mit der Primärwicklung verbundenen Transistor (TR1) zur periodischen Versorgung der Primärwicklung mit Energieimpulsen ($I_C$) zum Ausgleich von Verlusten an der Last;

und
Mittel (40) zum Erzeugen eines Taktsignals ($V_{PS}$) mit Impulsen, die im wesentlichen zeitlich mit den Spitzen der Minimalamplituden der Sinusschwingung ($V_C$) zusammenfallen,
gekennzeichnet durch

Regelmittel (20), die mit dem Taktsignal ($V_{PS}$) synchronisiert sind und die Arbeitsweise des Transistors (TR1) so steuern, daß dieser nicht in der Sättigung arbeitet und eine Aufwärt- und Abwärts regelung dadurch bewirkt, daß die Impulse des Taktsignals ($V_{PS}$) in Abhängigkeit von einem Signal (Rückkopplung) moduliert werden, das Abweichungen der abgeleiteten Spannungsquelle (VHV) anzeigt; und
wobei die Mittel zum Erzeugen eines Taktsignals schwingende Mittel (40) enthalten.

2. Stromversorgung nach Anspruch 1, dadurch gekennzeichnet, daß die schwingenden Mittel einen Kondensator (C3) und eine Diodenstrecke (Emitter/Basis von TR5) enthalten, die in Reihe mit der Primärwicklung (W1) geschaltet sind.

3. Stromversorgung nach Anspruch 2, dadurch gekennzeichnet, daß die Diodenstrecke Teil eines Transistors (TR5) in einem Multivibrator bildet.

4. Stromversorgung nach Anspruch 3, dadurch gekennzeichnet, daß der Multivibrator (TR5, TR6) eine freilaufende Frequenz aufweist, die kleiner ist als die Frequenz der Sinusschwingung.

5. Stromversorgung nach Anspruch 2, dadurch gekennzeichnet, daß die Impulse (IC) der leitenden Phase der Diodenstrecke (Emitter/Basis von TR5) entsprechen.

**Revendications**

1. Alimentation comprenant:

un transformateur (T1) ayant des enroulements primaire (W1) et secondaire (W2);
un moyen (C2) pour résonner avec ledit enroulement primaire (W1) en vue de générer une forme d'onde sinusoïdale ($V_C$);
un moyen (30) couplé audit enroulement secondaire pour développer une source de tension dérivée (THT) pour commander une charge;
un transistor (TR1) couplé audit enroulement primaire pour fournir périodiquement audit enroulement primaire des impulsions d'énergie ($I_C$) en vue de réapprovisionner les pertes de charge; et

un moyen (40) pour générer un signal de temporisation ($V_{PS}$) comprenant des impulsions qui coïncident substantiellement avec les crêtes d'amplitude minimum de ladite forme d'onde sinusoïdale ($V_C$);

**caractérisée par**

un moyen de régulation (20) synchronisé avec ledit signal de temporisation ($V_{PS}$), et commandant le fonctionnement dudit transistor (TR1) de telle sorte qu'il ne fonctionne pas en saturation et effectue une régulation vers le haut et vers le base en modulant les impulsions dudit signal de temporisation ($V_{PS}$), en réponse à un signal (une rétroaction) indicatif de variations de ladite source de tension dérivée (THT); et ledit moyen de génération d'un signal de temporisation comprend un moyen d'oscillation (40).

2. Alimentation selon la revendication 1, caractérisée en ce que ledit moyen d'oscillation comprend un condensateur (C3) et une jonction de diode (émetteur-base de TR5) couplés en série avec ledit enroulement primaire (W1).

3. Alimentation selon la revendication 2, caractérisée en ce que ladite jonction de diode fait partie d'un transistor (TR5) dans un multivibrateur.

4. Alimentation selon la revendication 3, caractérisée en ce que ledit multivibrateur (TR5, TR6) a une fréquence d'oscillation libre inférieure à la fréquence de ladite forme d'onde sinusoïdale.

5. Alimentation selon la revendication 2, caractérisée en ce que lesdites impulsions (IC) correspondent à la conduction de ladite jonction de diode (émetteur-base de TR5).

FIG. 1

EP 0 483 432 B1

FIG. 2

EP 0 483 432 B1

FIG. 3

FIG. 4

11

EP 0 483 432 B1

**FIG. 5**

$V_{IN}$

$VHV_{OUT}$

VHV MULTIPLIER

$V_A$

REGULATOR

EXTERNAL
PILOT
SIGNAL

VHV FEEDBACK SIGNAL